# EUROPÄISCHE PATENTANMELDUNG

(11) **EP 2 109 031 A2**
(43) Veröffentlichungstag der Anmeldung: **14.10.2009**
(21) Anmeldenummer: 09157499.6
(22) Anmeldetag: 07.04.2009
(51) Int. Cl.: G06F 3/01, G06F 3/048

(54) **Elektronische Anzeigeeinrichtung sowie Verfahren zu deren Bedienung**

(30) Priorität: 08.04.2008 DE 102008017840
(71) Anmelder: Vodafone Holding GmbH, 40213 Düsseldorf (DE)
(72) Erfinder: Geissler, Jan, 85521 Riemerling (DE)
(74) Vertreter: Müller & Schubert

(57) **Zusammenfassung**

Die vorliegende Erfindung betrifft eine elektronische Anzeigeeinrichtung (10), insbesondere portable elektronische Anzeigeeinrichtung, mit wenigstens einem Displayelement (11, 20, 26) zum Anzeigen von Inhalten (12, 21, 27), und mit einer Bedieneinrichtung zum Bedienen der Anzeigeeinrichtung (10), aufweisend wenigstens ein Bedienelement zum Zwecke der Eingabe und/oder Darstellung und/oder Interaktion. Um für eine möglichst direkte und intuitive Interaktion mit der elektronischen Anzeigeeinrichtung (10) eine einfache Bedienmöglichkeit zu schaffen, welche auf die bisher üblichen Bedienelemente mit technischem Erscheinungsbild, wie beispielsweise Schalter, Knöpfe, Regler und dergleichen, verzichten kann, ist vorgesehen, dass wenigstens ein Bedienelement als Sensorelement zur Erfassung von Bewegungsinformationen und/oder Lageinformationen bezüglich zumindest wenigstens eines Displayelements (11, 20) in wenigstens einer Raumrichtung (13, 14) ausgebildet ist und dass eine Steuereinrichtung vorgesehen ist, die zum Umsetzen der vom Sensorelement erfassten Signale in Eingabebefehle und/oder Darstellungsbefehle und/oder Interaktionsbefehle zum Betreiben der Anzeigeeinrichtung (10) ausgebildet ist.

## Beschreibung

Die vorliegende Erfindung betrifft zunächst eine elektronische Anzeigeeinrichtung gemäß dem Oberbegriff von Patentanspruch 1. Weiterhin betrifft die Erfindung ein Verfahren zum Bedienen einer solchen elektronischen Anzeigeeinrichtung gemäß dem Oberbegriff von Patentanspruch 11.

Elektronische Anzeigeeinrichtungen sind im Stand der Technik bereits auf unterschiedlichste Weise bekannt. Einen Typ solcher Anzeigeeinrichtungen stellen berührungssensitive Anzeigeeinrichtungen dar. Solche Anzeigeeinrichtungen, die auch unter der Bezeichnung "Touch-Screen" bekannt sind, sind bereits auf vielfältigste Weise bekannt. Hierbei wird eine berührungsempfindliche Schicht auf der Sichtseite der Anzeigeeinrichtung, bei der es sich dann um ein Displayelement handelt, aufgetragen. Bei Berührung mit einem Finger wird ein Berührungssensor ausgelöst, so dass die Koordinate der Berührung ermittelt werden kann.

Vorbekannte Lösungen beschreiben beispielsweise eine Touch-Screen-Technologie, bei der eine berührungssensitive Einrichtung der eigentlichen Bildschirmeinrichtung, etwa einer Display technologie wie beispielsweise rückbeleuchteten TFT-Displays (Thin Film Transistor), selbstleuchtenden OLED-Displays (Organic Light Emitting Diode) oder dergleichen, vorgelagert ist.

In der jüngeren Vergangenheit wurden auch verschiedene Lösungen im Bereich nicht selbstleuchtender Displays bekannt. Dazu gehört beispielsweise das so genannte elektronische Papier. Elektronisches Papier, kurz E-Papier (englisch e-paper), ist eine meist auf elektrophoretischer Technologie basierende papierähnliche digitale Displaytechnologie. Das E-Papier besteht beispielsweise aus einer auf einem hellen, oftmals weißen, Untergrund angebrachten elektrisch leitenden Folie, die kleine Zellen enthält. Farbpigmentpartikel in diesen Zellen reagieren auf elektrische Spannung. Durch Anbringen einer Spannung kann die Darstellung auf dem E-Papier Zelle für Zelle farblich verändert werden, wodurch ein digitales Gesamtbild aller Zellen entsteht. Gegenüber herkömmlichen Displays vereint E-Papier die Vorteile von elektronischen Displays und Papier, da ohne Hintergrundbeleuchtung ein fast papiergleich hohes Kontrastverhältnis erreichbar ist. Zudem weist E-Papier einen sehr geringen Stromverbrauch auf, da nur zur Änderung der Darstellung eine Spannung angelegt wird, nicht aber, solange die Darstellung unverändert bleibt. Weiterhin kann das Display blickwinkelunabhängig betrachtet werden und zudem auf einem sehr dünnen, biegsamen Substrat aufgebracht werden.

In anderer Ausgestaltung können elektronische Anzeigeeinrichtungen bekannter Bauart beispielsweise in Form von flexiblen Anzeigeeinrichtungen, beispielsweise flexiblen Displays, ausgebildet sein.

In der DE 103 24 143 A1 ist diesbezüglich eine mobile Vorrichtung beschrieben, die Informationen verarbeiten kann. Bei den Informationen handelt es sich insbesondere um Texte und Bilder, die gespeichert und dargestellt werden können. Die Vorrichtung besteht zunächst aus einem aus flexiblen Werkstoffen hergestellten Gehäuse und einem flexiblen Anzeigeelement. Weiterhin weist die Vorrichtung eine flexible Platine auf, auf der sich die Elektronik befindet, die den Betrieb der Vorrichtung steuert und ermöglicht. Zusätzlich weist die Vorrichtung eine drahtlose Schnittstelle auf, die geeignet ist, Daten lokal zu kommunizieren. Die Bedienung der Vorrichtung erfolgt über ein Bedienfeld, das über geeignete Eingabemittel und Navigations-Eingabemittel verfügt. Bei den Eingabemitteln handelt es sich beispielsweise um einzelne Tasten, einen Joystick oder dergleichen.

Derart bekannte Lösungen greifen zum Zwecke der Bedienung auf technische Eingabemittel zurück, beispielsweise auf Schalter, Knöpfe, Regler und dergleichen, wobei die Eingabemittel zum einen den Gerätecharakter stark prägen. Zum anderen sind derartige Eingabemittel natürlich auch anfällig für Verschmutzung, Feuchtigkeit, Ausfälle und dergleichen. Dies ist für den Betrieb solcher flexibler Vorrichtungen, insbesondere dann, wenn sie als flexible Anzeigeeinrichtungen verwendet werden, nachteilig.

Weitere Nachteile heutiger elektronischer Anzeigeeinrichtungen sind, insbesondere wenn Sie als portable Anzeigeeinrichtungen ausgebildet sind, unter anderem eine unspezifische Produktgestaltung, etwa durch Positionierung und Umsetzung als so genannter ,multi-document reader', sowie unspezifische Interaktionskonzepte, die nicht auf spezielles Mediennutzungs-Verhalten eingehen, etwa umständliche Bedienung, lange Umschaltzeiten (Latenzen) des Displays, und dergleichen.

Dünne, leichte und Strom sparende Bildschirme ermöglichen neuartige tragbare Anzeigegeräte mit eher nicht-technischem Erscheinungsbild. Für eine möglichst direkte und intuitive Interaktion mit solchen Geräten werden allerdings entsprechend einfache Eingabe- und Interaktionsmethoden benötigt, welche auf Bedienelemente mit technischem Erscheinungsbild wie Schalter, Knöpfe oder Regler möglichst verzichten.

Beispielsweise ist es im Stand der Technik auf anderem Gebiet schon bekannt, Bedienelemente der vorstehend genannten Art mit bestimmten Sensorelementen in Bezug zu setzen, beispielsweise mit Lagesensorelementen. Eine solche Lösung ist in der DE 20 2006 019 659 U1 offenbart, in der eine Fernbedienung für elektronische Geräte beschrieben ist. Die Fernbedienung ist als Polyeder ausgebildet, wobei auf den einzelnen Oberflächenseiten des Polyeders Bedienelemente für unterschiedliche elektronische Geräte angeordnet sind. Damit die entsprechenden Bedienelemente genutzt werden können, muss die Fernbedienung zunächst so gedreht werden, dass die jeweilige Fläche mit den gewünschten Bedienelementen auf der Oberseite liegt. Durch ein Lagesensorelement wird nun erkannt, welche der Flächen oben liegt. Anhand eines entsprechenden Sensorsignals werden dann die entsprechenden Bedienelemente auf der oben liegenden Seite aktiviert, das heißt benutzbar gemacht. Dennoch ist es auch bei dieser Lösung wiederum erforderlich, für die eigentliche Bedienung entsprechende Bedienelemente in Form von Knöpfen, Schaltern, und dergleichen vorzusehen, so dass auch diese bekannte Lösung die weiter oben genannten Nachteile aufweist.

Ausgehend vom genannten Stand der Technik liegt der vorliegenden Erfindung die Aufgabe zugrunde, eine elektronische Anzeigeeinrichtung sowie ein Verfahren zum Bedienen einer elektronischen Anzeigeeinrichtung bereitzustellen, welche(s) eine einfache Bedienung zulässt, und welche(s), bei Vermeidung der oben beschriebenen Nachteile, direkt und intuitiv wirkt, aber nicht zu einem technischen Gesamt-Erscheinungsbild beiträgt. Insbesondere soll für eine möglichst direkte und intuitive Interaktion mit der elektronischen Anzeigeeinrichtung eine einfache Bedienmöglichkeit geschaffen werden, welche auf die bisher üblichen Bedienelemente mit technischem Erscheinungsbild, wie beispielsweise Schalter, Knöpfe, Regler und dergleichen, verzichten kann.

Diese Aufgabe wird erfindungsgemäß gelöst durch die elektronische Anzeigeeinrichtung mit den Merkmalen gemäß dem unabhängigen Patentanspruch 1 sowie durch das Verfahren zum Bedienen einer elektronischen Anzeigeeinrichtung mit den Merkmalen gemäß dem unabhängigen Patentanspruch 11. Weitere Merkmale und Details der Erfindung ergeben sich aus den Unteransprüchen, der Beschreibung sowie den Zeichnungen.

Merkmale und Details, die im Zusammenhang mit der erfindungsgemäßen elektronischen Anzeigeeinrichtung beschrieben sind, gelten dabei selbstverständlich auch im Zusammenhang mit dem erfindungsgemäßen Verfahren zum Bedienen einer elektronischen Anzeigeeinrichtung, und umgekehrt, so dass alles in Bezug auf die elektronische Anzeigeeinrichtung Gesagte wechselweise auch für das Verfahren gilt, und umgekehrt.

Durch die vorliegende Erfindung wird eine Bedienmöglichkeit für eine Anzeigeeinrichtung bereitgestellt, welche direkt und intuitiv wirkt, aber nicht zu einem technischen Gesamt-Erscheinungsbild beiträgt, welche spezifisch für die Nutzung des Gerätes beziehungsweise des vorgesehenen Dienstes gestaltet ist, das heißt, die insbesondere einerseits keine Vorkenntnisse anderer Bedienungsparadigmen voraussetzen und andererseits keine unnötigen Bedienelemente aus anderen Bedienungsparadigmen übernehmen, und welche dem Nutzer auch bei längerer Antwortzeit ein Gefühl der unmittelbaren Interaktion vermittelt. Die erfindungsgemäße Lösung betrifft dabei die Sensorik, die Gerätearchitektur, die Dienstspezifikation und die Benutzerführung des entsprechenden Gerätes und der zugehörigen Dienste.

Gemäß dem ersten Aspekt der Erfindung wird eine elektronische Anzeigeeinrichtung, insbesondere portable elektronische Anzeigeeinrichtung, bereitgestellt, mit wenigstens einem Displayelement zum Anzeigen von Inhalten, und mit einer Bedieneinrichtung zum Bedienen der Anzeigeeinrichtung, aufweisend wenigstens ein Bedienelement zum Zwecke der Eingabe von Informationen durch den Nutzer und/oder der Interaktion mit der Anzeigeeinrichtung. Die Anzeigeeinrichtung ist erfindungsgemäß dadurch gekennzeichnet, dass wenigstens ein Bedienelement als Sensorelement zur Erfassung von Bewegungsinformationen und/oder Lageinformationen bezüglich zumindest wenigstens eines Displayelements in wenigstens einer Raumrichtung ausgebildet ist und dass eine Steuereinrichtung vorgesehen ist, die zum Umsetzen der vom Sensorelement erfassten Signale in Eingabebefehle und/oder Interaktionsbefehle zum Betreiben der Anzeigeeinrichtung ausgebildet ist.

Die vorliegende Erfindung betrifft eine elektronische Anzeigeeinrichtung, wobei die Erfindung natürlich nicht auf bestimmte Typen von Anzeigeeinrichtungen beschränkt ist. Die Anzeigeeinrichtung soll grundsätzlich zur Anzeige von Inhalten dienen. Einige nicht ausschließliche Beispiele für vorteilhafte Ausgestaltungen von Anzeigeeinrichtungen werden im weiteren Verlauf der Beschreibung näher erläutert.

Vorteilhaft kann die Anzeigeeinrichtung als portable Anzeigeeinrichtung ausgebildet sein. Beispielsweise kann die Anzeigeeinrichtung als berührungssensitive und/oder flexible Anzeigeeinrichtung ausgebildet sein. In diesen Fällen kann vorgesehen sein, dass zumindest ein Bestandteil der Anzeigeeinrichtung berührungssensitiv beziehungsweise flexibel ausgestaltet ist. Besonders vorteilhaft kann eine derartige Anzeigeeinrichtung in Form einer elektronischen Zeitung ausgebildet sein.

Die Anzeigeeinrichtung weist wenigstens ein Displayelement auf, welches zur eigentlichen Anzeige von Inhalten dient. Dabei ist die Erfindung weder auf eine bestimmte Ausgestaltung der Displayelemente, noch auf eine bestimmte Anzahl von Displayelementen beschränkt. Einige vorteilhafte, jedoch nicht ausschließliche Beispiele werden im weiteren Verlauf der Beschreibung näher erläutert.

Eine Technologie für solche Displayelemente ist beispielsweise elektronisches Papier. Hierbei handelt es sich um eine bistabile Display technologie, die beispielsweise auf Elektrophorese basiert (kurz 'e-paper' oder E-Papier). E-Papier hat gegenüber herkömmlichen Bildschirmen und portablen elektronischen Lese- und Eingabe-Geräten signifikante Nutzungsvorteile. So ist beispielsweise die Lesbarkeit in heller Umgebung sehr gut, und die Inhaltsdarstellung bewirkt einen nur sehr geringen Energieverbrauch. Das E-Papier besteht vorteilhaft aus einer auf einem hellen, oftmals weißen, Untergrund angebrachten elektrisch leitenden Folie, die kleine Zellen enthält. Farbpigmentpartikel in diesen Zellen reagieren auf elektrische Spannung. Durch Anbringen einer Spannung kann die Darstellung auf dem E-Papier Zelle für Zelle farblich verändert werden, wodurch ein digitales Gesamtbild aller Zellen entsteht. Gegenüber herkömmlichen Displays vereint E-Papier die Vorteile von elektronischen Displays und Papier, wobei auch ohne Hintergrundbeleuchtung ein fast papiergleich hohes Kontrastverhältnis erreichbar ist. Weiterhin kann das Display blickwinkelunabhängig betrachtet werden und zudem auf einem sehr dünnen, biegsamen Substrat aufgebracht werden.

Weiterhin verfügt die Anzeigeeinrichtung über eine Bedieneinrichtung, die zum Zwecke der Eingabe und/oder Darstellung und/oder Interaktion wenigstens ein Bedienelement aufweist. Mittels der Bedienelemente können vom Nutzer Informationen, beispielsweise in Form von Inhalten, Daten, Anweisungen, Befehlen und dergleichen in die Anzeigeeinrichtung eingegeben werden. Mittels der Bedienelemente kann aber auch die Darstellung von Inhalten auf dem Displayelement beeinflusst werden, beispielsweise ein Vergrößern, Verkleinern, Verschieben von Inhalten, und dergleichen. Natürlich kann mittels der Bedienelemente auch eine Interaktion mit der Anzeigeeinrichtung bewerkstelligt werden. Unter Interaktion soll dabei generell ein wechselseitig aufeinander Einwirken von wenigstens zwei Einheiten verstanden werden. Beispielsweise handelt es sich bei der Interaktion um ein sich gegenseitig beeinflussen der Einheiten, ein miteinander kommunizieren der Einheiten, und dergleichen. Beispielsweise kann eine derartige Interaktion zwischen dem Nutzer der Anzeigeeinrichtung mit der Anzeigeeinrichtung, aber auch eine Interaktion der Anzeigeeinrichtung mit externen Geräten, oder dergleichen bewerkstelligt werden. Dabei ist die Erfindung weder auf eine bestimmte Anzahl, noch auf bestimmte Typen von Bedienelementen beschränkt. Wichtig ist lediglich, dass die Bedienelemente eine möglichst einfache, direkte und intuitive Bedienung ermöglichen und dabei insbesondere nicht das Gesamt-Erscheinungsbild der Anzeigeeinrichtung negativ beeinflussen.

Um nun die im Zusammenhang mit dem Stand der Technik beschriebenen Nachteile umgehen zu können, sind die Bedienelemente der vorliegenden Erfindung in besonderer Weise ausgebildet.

Erfindungsgemäß ist wenigstens ein Bedienelement als Sensorelement zur Erfassung von Bewegungsinformationen und/oder Lageinformationen ausgebildet. Dabei ist die Erfindung grundsätzlich nicht auf bestimmte Ausgestaltungsformen für die genannten Sensorelemente beschränkt. Einige vorteilhafte, jedoch nicht ausschließliche Beispiele für geeignete Bedienelemente werden im weiteren Verlauf der Beschreibung näher erläutert.

Das wenigstens eine Sensorelement hat die Aufgabe, Bewegungsinformationen und/oder Lageinformationen bezüglich zumindest wenigstens eines Displayelements in wenigstens einer Raumrichtung zu erfassen. Vorteilhaft kann die Erfassung auch in zwei Raumrichtungen oder drei Raumrichtungen, das heißt im dreidimensionalen Raum, erfolgen. Das wenigstens eine Sensorelement hat dabei die Aufgabe die Lage und/oder Orientierung des wenigstens eines Displayelements zu erfassen. Weiterhin ermittelt das wenigstens eine Sensorelement eine Bewegung des Displayelements aus einer gegebenen Lage heraus und/oder eine Lageveränderung des Displayelements.

Schließlich verfügt die Anzeigeeinrichtung auch über eine Steuereinrichtung, die zum Steuern der Anzeigeeinrichtung dient. Insbesondere hat die Steuereinrichtung die Funktion, die von dem wenigstens einen Sensorelement erfassten Signale in - insbesondere direkte - Eingabebefehle und/oder Darstellungsbefehle und/oder Interaktionsbefehle umzuwandeln. Mittels dieser Steuerbefehle wird dann die Anzeigeeinrichtung in der entsprechenden Weise betrieben. Dabei werden die vom wenigstens einen Sensorelement erfassten Signale, die bezüglich der räumlichen Lage des wenigstens einen Displayelements ermittelt worden sind, zur direkten Steuerung der Anzeigeeinrichtung verwendet. Die Steuereinrichtung erfasst die vom Sensorelement ermittelten Sensorsignale. Wird dabei eine Veränderung der Signale festgestellt, beispielsweise indem die Signale gegen zuvor ermittelte Signale verglichen werden, so ergibt sich daraus, dass die Anzeigeeinrichtung bewegt worden ist, beziehungsweise, dass deren Lage verändert worden ist. Je nach Art und Umfang der Veränderung können dann bestimmte Aktionen von der Steuereinrichtung initiiert werden. Wie dies im Einzelnen geschehen kann, wird im weiteren Verlauf der Beschreibung näher erläutert. Die Steuereinrichtung kann beispielsweise flexibel ausgestaltet sein und hierzu beispielsweise auf einer flexiblen Platine angeordnet/ausgebildet sein.

Die erfindungsgemäße Ausgestaltung umfasst insbesondere die Verknüpfung von durch Sensoren erfasste Lageinformationen und/oder Bewegungsinformation mit einem intuitiven Interaktionsprinzip, welches primäre Interaktionen, zum Beispiel Blättern von Seiten, nicht über technisch anmutende Bedienelemente wie etwa Knöpfe oder Schalter, sondern über die Bewegung des gesamten Gerätes vorsieht.

Das wenigstens eine Sensorelement erkennt die horizontale und/oder vertikale Drehung des wenigstens einen Displayelements.

Aus der erkannten Lage des Gerätes kann eine primäre Interaktion abgeleitet beziehungsweise ausgelöst werden. Diese kann vom aktuellen Kontext abhängen. Beispielweise kann ein senkrecht stehendes Gerät ein Vorwärtsblättern auslösen, wenn zuvor eine 45-Grad-Lage erkannt wurde, oder es kann ein Rückwärtsblättern auslösen, wenn zuvor eine -45-Grad-Lage erkannt wurde. Aus der erkannten Bewegung des Gerätes kann ebenfalls eine Interaktion abgeleitet beziehungsweise ausgelöst werden. Beispielsweise kann eine erkannte Drehbewegung um 90 Grad das Vorwärtsblättern oder eine erkannte Drehbewegung um -90 Grad das Rückwärtsblättern auslösen. Insbesondere kann eine solche Interaktion vorhersehend ausgelöst werden. Beispielsweise kann die Darstellung der nächsten Ansicht auf einem rückwärtigen Displayelement erfolgen, bevor das Gerät vollständig gewendet wurde, so dass störend hohe Latenzzeiten des Displays verborgen werden können.

Drehbewegungen um unterschiedliche Achsen können unterschiedliche Interaktionen auslösen. Beispielsweise könnte eine Drehung um eine Längsachse ein Blättern auslösen, während eine Drehung um eine Querachse einen Menüwechsel oder Kapitelsprung auslösen könnte. Andere Interaktionen, beispielsweise Auswahlvorgänge oder dergleichen, könnten über ein kurzzeitiges Vor- oder Zurückbewegen der Anzeigeeinrichtung erkannt werden.

Durch die erfindungsgemäß ausgestaltete Anzeigeeinrichtung werden insbesondere die ganzheitliche und zusammenhängende Erscheinung, die haptischen Erfahrungen und Vorteile sowie die gewohnte intuitive Bedienung eines papier-basierten Mediums auf ein elektronisches Gerät übertragen.

Vorteilhaft kann wenigstens ein Sensorelement zur Erfassung von Bewegungsinformationen und/oder Lageinformationen als Sensorelement zur Erfassung einer Drehbewegung und/oder einer Klappbewegung um wenigstens eine Achse ausgebildet sein. Eine Drehbewegung kann vorteilhaft auch um zwei oder drei Achsen erfolgen.

Beispielsweise kann vorgesehen sein, dass die Anzeigeeinrichtung beziehungsweise das wenigstens eine Displayelement sowohl starr justiert in der gesamten Fläche als auch gefaltet beziehungsweise geschoben für Teilansichten und spezielle Interaktion genutzt werden kann.

Es ist auch eine Bauvariante mit zwei Displayelementen denkbar. Zusammengeklappt wird das Gerät durch die Außenseiten geschützt. Nach dem Aufklappen hat man zwei Displayelemente auf der Frontseite, die dann beispielsweise eine Leseseite darstellt. Die beiden Displayelemente könnten auch so angeordnet sein, dass diese umgeschlagen werden können. Dadurch erhält man ein kleineres Format, das jedoch auf Vorder- und Rückseite über die Displayelemente gelesen werden kann. Eine weitere Klappalternative könnte vorsehen, mit mehreren Displayelementen, beispielsweise drei Displayelementen, eine 3-fache Faltung zu ermöglichen; etwa in einem Langformat. Eine Betrachtungsmöglichkeit besteht vorteilhaft sowohl über die Vorder- als auch die Rückseite. Bei einer kompletten Faltung ist das Gerät klein und länglich. Inhalte können nach dem Zusammenfalten, beispielsweise in einzelnen Zeitungskolumnen, dargestellt werden. Auf diese Weise kann die Anzeigeeinrichtung auch in beengten Situationen, wie beispielsweise in der U-Bahn, komfortabel betrachtet werden. Einige vorteilhafte, jedoch nicht ausschließliche Beispiele hierzu werden im weiteren Verlauf der Beschreibung näher erläutert.

Vorzugsweise kann wenigstens ein Sensorelement zur Erfassung von Bewegungsinformationen und/oder Lageinformationen als Sensorelement zur Erfassung einer Verschiebung in wenigstens einer Schieberichtung ausgebildet sein.

Beispielsweise kann vorgesehen werden, dass die Anzeigeeinrichtung über einen Schiebemechanismus von einem 'zwei-seitigen' zu einem kleineren 'ein-seitigen' Gerät verändert werden kann. In einem solchen Fall sind vorteilhaft wenigstens zwei Displayelemente vorgesehen, wobei dann vorteilhaft jeweils nur über die Frontsicht betrachtet, beispielsweise gelesen, wird. Ein kurzzeitiges Vor- oder Zurückschieben der Anzeigeeinrichtung kann gegebenenfalls eine bestimmte Aktion auslösen, etwa einen Auswahlvorgang.

Nachfolgend werden einige Beispiele beschrieben, wie die Sensorelemente zur Erfassung von Bewegungsinformationen und/oder Lageinformationen vorteilhaft ausgebildet sein können, ohne dass die Erfindung auf diese genannten Beispiele beschränkt ist. Vorteilhaft kann wenigstens ein Sensorelement zur Erfassung von Bewegungsinformationen und/oder Lageinformationen als Beschleunigungssensorelement und/oder als Gyrosensorelement und/oder als Magnetfeldsensorelement ausgebildet sein.

Die Erfassung der Lage des Displayelements kann beispielsweise durch fest integrierte Beschleunigungssensoren erfolgen, welche die Beschleunigung in vorzugsweise drei Achsen messen. Ein Beschleunigungssensor ist grundsätzlich ein Sensor, der die Beschleunigung misst, indem die auf eine Testmasse wirkende Trägheitskraft bestimmt wird. Die Lage kann weiterhin beispielsweise mit einem Gyrosensor erfasst werden. Ein Gyrosensor ist ein besonderer Beschleunigungssensor, der Richtungsänderungen erfasst. Weiterhin kann die Lage beispielsweise mit einem Magnetfeldsensor erfasst werden. Die Lage des Geräts kann somit relativ zu einem Referenzvektor, beispielsweise der Erdbeschleunigung, einem definierten Startzustand oder dem Erdmagnetfeld bestimmt werden.

Grundsätzlich ist es für die Erfindung ausreichend, wenn ein einziges Sensorelement zur Erfassung von Bewegungsinformationen und/oder Lageinformationen verwendet wird. Vorteilhaft können aber auch zwei oder mehr Sensorelemente verwendet werden, wobei auch unterschiedliche Sensorelementtypen kombiniert werden können.

Neben den vorstehend genannten Sensorelementen können aber auch noch weitere, andersartige Sensorelemente zum Einsatz kommen.

Vorteilhaft kann wenigstens ein weiteres Sensorelement in Form eines berührungssensitiven Sensorelements vorgesehen sein. Solche Sensorelemente sind insbesondere dann von Vorteil, wenn es sich bei der elektronischen Anzeigeeinrichtung um eine berührungssensitive Anzeigeeinrichtung auf der Basis der Touch-Screen-Technologie handelt, die insbesondere für nicht-lichtemittierende Bildschirmeinrichtungen (Displays), wie beispielsweise elektronisches Papier, geeignet ist.

Die Sensorelemente sind vorteilhaft so ausgebildet, dass sie die Position der Berührung auf der Vorderseite des Displayelements (der Sichtseite) feststellen können. Die Sensorelemente erkennen die Berührung beziehungsweise den Tippvorgang des Fingers und erlauben die Errechnung der Koordinate. Hierdurch wird eine Navigation durch auf dem Displayelement (beispielsweise dem E-Papier) dargestellte Inhalte innerhalb der durch die Sensorelemente repräsentierten Auflösung ermöglicht. Zusätzlich lässt sich diese Technologie vollständig mit dem Finger bedienen und erfordert keine weiteren Bedienelemente.

Die Erfindung ist weder auf eine bestimmte Anzahl noch auf bestimmte Typen solcher berührungssensitiver Sensorelemente beschränkt. Beispielsweise kann wenigstens ein solches Sensorelement in Form eines Bewegungssensorelements, etwa in Form eines Beschleunigungssensorelements und/oder eines Schwingungssensorelements, ausgebildet sein. Alternativ oder zusätzlich kann wenigstens ein solches Sensorelement beispielsweise auch als Akustiksensorelement ausgebildet sein.

Bei einem Bewegungssensorelement handelt es sich generell um ein Sensorelement, welches zur Messung von Bewegungsgrößen, wie beispielsweise Weg, Geschwindigkeit oder Beschleunigung, oder zur Messung von Kraftwirkungen, wie beispielsweise Kraft, Moment, Dehnung, ausgebildet ist. Diesbezüglich ist die Erfindung nicht auf bestimmte Ausgestaltungsformen für die Bewegungssensoren beschränkt. Vorteilhaft kann wenigstens ein als Bewegungssensorelement ausgebildetes Sensorelement als Beschleunigungssensorelement ausgebildet sein. Ein Beschleunigungssensor ist generell ein Sensor, der die Beschleunigung misst. Somit kann beispielsweise bestimmt werden, ob eine Geschwindigkeitszunahme oder -abnahme stattfindet. Ein Beschleunigungssensor kann auf unterschiedlichste Weise ausgebildet sein. Ein Beschleunigungssensor wird häufig auch als Accelerometer bezeichnet.

Vorteilhaft kann wenigstens ein als Bewegungssensorelement ausgebildetes Sensorelement als Schwingungssensorelement ausgebildet sein. Ein Schwingungssensorelement ist grundsätzlich ein Sensor, welcher Schwingungen aufnimmt, und diese in elektrische Signale umwandelt. Dabei ist die Erfindung natürlich nicht auf bestimmte Typen von Schwingungssensorelementen beschränkt. Vorzugsweise kann wenigstens ein als Schwingungssensorelement ausgebildetes Sensorelement als Vibrationssensorelement ausgebildet sein. Ein solcher Vibrationssensor nimmt die Schwingungen, das heißt die Vibrationen auf, vorteilhaft durch freischwingende Strukturen, und wandelt diese in elektrische Signale um. Beispielsweise könnte vorgesehen sein, dass der Vibrationssensor ein Gehäuse aufweist, in dem eine freischwingende Struktur angeordnet ist, und die bei auftretenden Vibrationen mit einem Kontaktelement am Gehäuse in Berührung kommt. Ist dies der Fall, wird ein elektrischer Impuls ausgelöst. Die elektrischen Impulse werden in einer Elektronik ausgewertet und in anwendungsspezifische Schaltbefehle umgesetzt.

Vorzugsweise kann wenigstens ein als Bewegungssensorelement ausgebildetes Sensorelement als piezoelektrisches Bewegungssensorelement ausgebildet sein. Derartige Sensorelemente basieren auf dem piezoelektrischen Effekt. Beim piezoelektrischen Effekt entsteht bei Ausübung von Druck auf einen elektrisch polarisierten Kristall eine elektrische Spannung. Der piezoelektrische Effekt basiert auf dem Phänomen, dass bei der Verformung bestimmter Materialien auf der Oberfläche elektrische Ladungen auftreten. Er beschreibt somit generell das Zusammenspiel von mechanischem Druck und elektrischer Spannung in Festkörpern.

In einer vorteilhaften Ausführungsform werden Sensorelemente in Form von Vibrationssensoren, beispielsweise auf Basis von piezoelektrischen Accelerometern, eingesetzt.

Wie weiter oben schon ausgeführt wurde, kann eines der Sensorelemente vorteilhaft auch als Akustiksensorelement ausgebildet sein. Ein Akustiksensor zeichnet sich generell dadurch aus, dass er Schallwellen erfasst, und diese in geeignete Signale, etwa elektrische Signale umsetzt. Diesbezüglich ist die Erfindung nicht auf bestimmte Ausgestaltungsformen für die Akustiksensoren beschränkt.

Vorteilhaft kann wenigstens ein Akustiksensorelement als elektroakustischer Wandler ausgebildet sein. Die Berührung einer Anzeigeoberfläche, etwa der Sichtoberfläche der Bildschirmeinrichtung, erzeugt Schallwellen, welche über das Anzeigematerial, etwa das Material der Bildschirmeinrichtung, an den oder die elektroakustischen Wandler weitergeleitet werden. Vorteilhaft kann vorgesehen sein, dass zwei oder mehr solcher elektroakustischer Wandler vorgesehen sind, die beabstandet voneinander vorgesehen sind. Beispielsweise könnten die Akustiksensorelemente an den Rändern der Anzeigeeinrichtung vorgesehen sein. Ein elektroakustischer Wandler erzeugt den akustischen Wellen entsprechende elektrische Signale. Die Position der Berührung auf der Anzeigeoberfläche kann beispielsweise durch Vergleich der Signale von mehreren elektroakustischen Wandlern bestimmt werden. Störgeräusche können dabei anhand geeigneter Algorithmen differenziert und herausgefiltert werden.

Vorteilhaft kann die elektronische Anzeigeeinrichtung als flexible Anzeigeeinrichtung ausgebildet sein. Ist dies der Fall, kann beispielsweise wenigstens ein weiteres Sensorelement zum Erfassen des Biegezustands der elektronischen Anzeigeeinrichtung vorgesehen sein. Bei einer flexiblen elektronischen Anzeigeeinrichtung, die zumindest bereichsweise in zumindest eine Biegerichtung biegbar ist, kann dann die Biegung genutzt werden, um das elektronische Anzeigeeinrichtung zu steuern beziehungsweise zu bedienen. Dabei ist es grundsätzlich freigestellt, wo das Biegesensorelement an/in der elektronischen Anzeigeeinrichtung vorgesehen ist. Beispielsweise kann das Biegesensorelement innerhalb und/oder außerhalb vorgesehen oder angeordnet sein. Vorteilhaft befindet sich das wenigstens eine Biegesensorelement jedoch innerhalb der elektronischen Anzeigeeinrichtung. Grundsätzlich ist es ausreichend, wenn die elektronische Anzeigeeinrichtung ein einziges Biegesensorelement aufweist. Vorteilhaft verfügt diese jedoch über zwei oder mehr Biegesensorelemente. Diese können vorteilhaft über das gesamte elektronische Gerät verteilt sein. Natürlich ist es auch denkbar, dass die Biegesensorelemente nur in bestimmten Bereichen des elektronischen Geräts vorgesehen sind.

Beispielsweise kann es gewünscht sein, dass durch das Biegen der flexiblen elektronischen Anzeigeeinrichtung nur eine begrenzte Eingabemöglichkeit zur Verfügung gestellt werden soll. Beispielsweise ist denkbar, dass nur drei grundlegende Biegezustände erkannt werden sollen. Hierbei kann es sich beispielsweise um den Zustand "nicht gebogen", "konkav gebogen" oder "konvex gebogen" handeln. Auf diese Weise könnten dann neben dem Zustand "nicht gebogen" zwei weitere prinzipielle Zustände unterschieden werden, nämlich "nach oben biegen" und "nach unten biegen". In einem solchen Fall könnte die Biegung lediglich grundlegende Steuerbefehle generieren.

Beispielsweise kann vorgesehen sein, dass wenigstens ein Biegesensorelement als optisches Biegesensorelement ausgebildet ist. Optische Biegesensorelemente sind in Anwendungen auf anderen technischen Gebieten an sich bereits im Stand der Technik bekannt. Ein optisches Biegesensorelement zeichnet sich grundsätzlich dadurch aus, dass eine durch Biegung entstehende optische Dämpfung gemessen wird. Dazu ist häufig vorgesehen, dass das optische Biegesensorelement in Form einer Faseroptik ausgebildet ist. Derartige optische Biegesensorelemente bestehen häufig aus einem oder mehreren Lichtwellenleitern, der/die randseitig derart mit einer Oberflächestruktur versehen sind, dass diese bei Biegung des Lichtwellenleiters eine biegeabhängige Wellenleiterdämpfung bewirkt. In anderer Ausgestaltung kann wenigstens ein Biegesensorelement als biegesensitives Sensorband ausgebildet sein. Beispielsweise kann der bei der Biegung eines solchen Sensorbandes entstehende Zug, Druck oder eine entsprechend auftretende Torsion erfasst werden. Natürlich ist auch denkbar, dass das Sensorband wie vorstehend beschrieben faserförmig ausgebildet ist. Vorteilhaft kann auch vorgesehen sein, dass wenigstens ein Biegesensorelement als piezoelektrisches Biegesensorelement ausgebildet ist. Derartige Biegesensorelemente sind in Anwendungen auf anderen technischen Gebieten an sich bereits im Stand der Technik bekannt. Sie verfügen beispielsweise über wenigstens ein Biegeelement aus piezoelektrischem Material. Wenn auf das Sensorelement Kräfte wirken, wird das Sensorelement ausgelenkt, wobei aufgrund des piezoelektrischen Effekts eine Ladungsverschiebung auftritt, die an den Oberflächen des Sensorelements eine positive beziehungsweise negative elektrische Ladung zur Folge hat.

Die Erfindung ist weder auf eine bestimmte Anzahl von Sensorelementen, noch auf den Einsatz bestimmter Sensorelementtypen beschränkt. Neben wenigstens einem Sensorelement zur Erfassung von Bewegungsinformationen und/oder Lageinformationen kann die Anzeigeeinrichtung beliebig viele andere der vorstehend beschriebenen Sensorelemente, auch in beliebigen Kombinationen, aufweisen.

Sämtlichen vorgenannten Sensorelementen ist gemeinsam, dass sie ein intuitives Interaktionsprinzip ermöglichen, welches Interaktionen nicht über technisch anmutende Bedienelemente, wie beispielsweise Knöpfe oder Schalter, vorsieht.

Vorteilhaft kann vorgesehen sein, dass wenigstens zwei Bedienelemente in Form von Sensorelementen vorgesehen sind, die beabstandet voneinander an unterschiedlichen Orten der Anzeigeeinrichtung vorgesehen sind. Es kann beispielsweise sinnvoll sein, mehrere gleichartige und/oder andersartige Sensorelemente möglichst weit von einander entfernt auf/an/in der Anzeigeeinrichtung zu platzieren, beispielsweise an diagonal gegenüberliegenden Ecken des Gerätes. Es kann weiterhin sinnvoll sein, unterschiedliche Sensoren zu kombinieren. Beispielsweise können zwei oder mehr Sensorelemente vorgesehen sein, wobei die Sensorelemente am Rand des Displayelements beziehungsweise der Anzeigeeinrichtung vorgesehen sind. Die Sensorelemente können sich dann vorteilhaft in den Ecken befinden. In anderer Ausgestaltung können zwei oder mehr Sensorelemente vorgesehen sein, wobei die Sensorelemente in Form einer Matrix aus Sensorelementen vorgesehen sind. Dabei ist die Erfindung nicht auf eine bestimmte Anzahl von Matrixspalten und Matrixzeilen beschränkt.

In weiterer Ausgestaltung kann in der Steuereinrichtung eine Speichereinrichtung zum Speichern der von wenigstens einem Sensorelement erfassten Signale vorgesehen sein. Die Steuereinrichtung weist dann vorteilhaft auch eine Vergleichseinrichtung zum Vergleichen aktuell erfasster Sensorsignale mit zurückliegenden, in der Speichereinrichtung abgespeicherten Sensorsignalen auf. In manchen Fällen kann es sinnvoll sein, auch zurückliegende erfasste Sensordaten beziehungsweise Sensorsignale zu berücksichtigen.

Vorteilhaft kann vorgesehen sein, dass die elektronische Anzeigeeinrichtung eine Einrichtung zum zumindest zeitweiligen Deaktivieren des wenigstens einen Sensorelements aufweist. Alternativ oder zusätzlich kann vorgesehen sein, dass eine Einrichtung zum zumindest zeitweiligen Blockieren der Umsetzung der erfassten Sensorsignale in Steuerbefehle vorgesehen ist. Auf diese Weise wird sichergestellt, dass ein unbeabsichtigtes Betätigen zu einer ungewollten Erzeugung von Steuerbefehlen führen kann, sobald die Einrichtung aktiviert ist.

Wie vorstehend schon ausgeführt wurde, weist die Anzeigeeinrichtung gemäß der vorliegenden Erfindung wenigstens ein Displayelement auf. Natürlich ist auch möglich, dass die Anzeigeeinrichtung zwei oder mehr Displayelemente aufweist. Diese sind dann vorteilhaft nebeneinander und/oder hintereinander angeordnet.

Nachfolgend werden diesbezüglich einige vorteilhafte, jedoch nicht ausschließliche Beispiele erläutert. Beispielsweise können wenigstens zwei Displayelemente klappbar miteinander verbunden sein. Natürlich können auch mehr als zwei Displayelemente auf diese Weise miteinander verbunden sein. Die Verbindung kann vorteilhaft mittels einer Scharniereinrichtung bewerkstelligt werden. Die Anzeigeeinrichtung kann dann sowohl starr justiert in der gesamten Fläche als auch gefaltet, beispielsweise für Teilansichten und spezielle Interaktionen, genutzt werden. Denkbar ist beispielsweise eine Ausführungsform mit zwei Displayelementen, die sich zusammenklappen lassen. Zusammengeklappt wird das Gerät durch die Außenseiten geschützt. Nach dem Aufklappen hat man zwei Displayelemente auf der Betrachtungsseite zur Verfügung. Es kann auch vorgesehen werden, dass die beiden Displayelemente so umgeschlagen werden können, dass sie aufeinander zu liegen können, wobei sich dann auf beiden Außenflächen jeweils ein Displayelement befindet. Dadurch erhält man ein kleineres Format, das jedoch auf Vorder- und Rückseite über die Displayelemente betrachtet, beispielsweise gelesen, werden kann. Gemäß einer weiteren Klappalternative wird mit mehreren Displayelementen eine mehrfache Faltung ermöglicht. Eine Betrachtungsmöglichkeit besteht dabei vorteilhaft sowohl über die Vorder- als auch über die Rückseite. Bei einer kompletten Faltung ist das Gerät klein und länglich. Inhalte können nach dem Zusammenfalten dargestellt werden, die auch in beengten Situationen komfortabel betrachtet werden können. Vorteilhaft ist in einem solchen Fall die Verwendung von drei Displayelementen, mittels derer dann eine 3-fache Faltung möglich wird.

Alternativ oder zusätzlich können zwei oder mehr Displayelemente auch doppelseitig angeordnet sein. Eine solche Ausgestaltung kann beispielsweise realisiert werden, indem die Anzeigeeinrichtung ein Grundelement aufweist und dass auf der Vorderseite und der Rückseite des Grundelements jeweils ein Displayelement vorgesehen ist. Die Anzeigeeinrichtung lässt sich dann ähnlich wie ein Buch oder eine Zeitung bedienen, wobei die Inhalte jeweils auf der Vorder- und Rückseite dargestellt sind. Neuere Entwicklungen lassen eine solche Ausgestaltung mittlerweile auch unter Verwendung von nur einem Displayelement zu. Mittlerweile sind Lösungen bekannt geworden, bei denen ein einziges Displayelement doppelseitig ausgestaltet ist, so dass anstelle der bisher erforderlichen zwei Paneele in Form von Displayelementen nunmehr nur noch ein Panel in Form eines Displayelements benötigt wird.

Alternativ oder zusätzlich können zwei oder mehr Displayelemente auch verschiebbar gegeneinander angeordnet sind. Beispielsweise ist denkbar, dass die Anzeigeeinrichtung über einen Schiebemechanismus von einem ,zwei-seitigen' zu einem kleineren, 'ein-seitigen' Gerät verändert werden kann. Dies gilt natürlich bei Verwendung von mehr als zwei Displayelementen entsprechend, die dann teleskopartig gegeneinander verschoben werden können. Die Anzeigeeinrichtung kann dann sowohl starr justiert in der gesamten Fläche als auch zusammen geschoben für Teilansichten und spezielle Interaktion genutzt werden.

Diese Veränderungsmöglichkeiten der Form der Anzeigeeinrichtung entsprechen insbesondere den vielfältigen Nutzungsformen von Papier-Zeitungen, übertragen auf ein elektronisches Gerät.

Vorzugsweise kann die elektronische Anzeigeeinrichtung als mobile informationsverarbeitende Einrichtung, insbesondere als Informationsvorrichtung und/oder Lesevorrichtung ausgebildet sein. Im Falle einer Lesevorrichtung könnte es sich bei der elektronischen Anzeigeeinrichtung beispielsweise ein elektronisches Buch, eine elektronische Zeitung oder dergleichen handeln, wobei eine solche Lesevorrichtung dann vorteilhaft in Form eines Displays auf Basis von elektronischem Papier ausgebildet ist.

Die erfindungsgemäße Anzeigeeinrichtung ermöglicht insbesondere eine spezifische Verknüpfung einer Anzeigeeinrichtung mit mehreren Displayelementen mit einer Lagesensor-basierten Bedienung. Dadurch lässt sich insbesondere ein Gerät zur Visualisierung von Dokumenten mit Displayelementen auf der Vorder- und Rückseite und eine Bedienung durch Bewegungssensoren, ohne weitere, optische Bedienelemente, realisieren.

Gemäß einem zweiten Aspekt der Erfindung wird ein Verfahren zum Bedienen einer elektronischen Anzeigeeinrichtung, insbesondere einer portablen elektronischen Anzeigeeinrichtung, bereitgestellt, wobei die Anzeigeeinrichtung wenigstens ein Displayelement zum Anzeigen von Inhalten, und eine Bedieneinrichtung zum Bedienen der Anzeigeeinrichtung, aufweisend wenigstens ein Bedienelement zum Zwecke der Eingabe von Informationen durch den Nutzer und/oder der Interaktion mit der Anzeigeeinrichtung, aufweist. Das Verfahren ist erfindungsgemäß gekennzeichnet durch folgende Schritte: a) mittels wenigstens eines Bedienelements, das als Sensorelement zur Erfassung von Bewegungsinformationen und/oder Lageinformationen bezüglich zumindest wenigstens eines Displayelements in wenigstens einer Raumrichtung ausgebildet ist, wird die Lage des Displayelements erfasst sowie eine Bewegung des Displayelements aus dieser Lage heraus und/oder eine Lageveränderung des Displayelements ermittelt; b) die vom Sensorelement erfassten Signale werden an eine Steuereinrichtung der Anzeigeeinrichtung weitergeleitet; c) in der Steuereinrichtung werden die vom Sensorelement erfassten Signale in Eingabebefehle und/oder Interaktionsbefehle zum Betreiben der Anzeigeeinrichtung umgesetzt.

Ein solches Verfahren stellt eine besonders vorteilhafte, einfache Eingabemethode für elektronische Anzeigeeinrichtungen zur Verfügung.

Vorteilhaft ist das Verfahren zum Bedienen einer wie vorstehend beschriebenen erfindungsgemäßen elektronischen Anzeigeeinrichtung ausgebildet, so dass bezüglich der Durchführung und Funktionsweise eines entsprechenden Verfahrens auf die vorstehenden Ausführungen zur elektronischen Anzeigeeinrichtung vollinhaltlich Bezug genommen und verwiesen wird.

Die vorliegende Erfindung verbindet die Nutzungsvorteile und Erwartungen an die Handhabung, zum Beispiel Haptik, ganzheitliche Erscheinung und dergleichen, eines bisher auf Papier basierenden Mediums mit dem digitalen Zusatznutzen eines elektronischen Geräts, das über Funk- und Sensortechnologien Interaktion und Kommunikation ermöglicht.

Die Erfindung wird nun anhand von Ausführungsbeispielen unter Bezugnahme auf die beiliegenden Zeichnungen näher erläutert. Es zeigen
- Figur 1: eine erste Bedienmöglichkeit einer erfindungsgemäßen elektronischen Anzeigeeinrichtung;
- Figur 2: eine zweite Bedienmöglichkeit einer erfindungsgemäßen elektronischen Anzeigeeinrichtung;
- Figur 3: eine dritte Bedienmöglichkeit einer erfindungsgemäßen elektronischen Anzeigeeinrichtung;
- Figur 4: eine vierte Bedienmöglichkeit einer erfindungsgemäßen elektronischen Anzeigeeinrichtung;
- Figur 5: eine fünfte Bedienmöglichkeit einer erfindungsgemäßen elektronischen Anzeigeeinrichtung; und
- Figur 6: eine sechste Bedienmöglichkeit einer erfindungsgemäßen elektronischen Anzeigeeinrichtung.

In den Figuren ist eine elektronische Anzeigeeinrichtung 10 dargestellt, die als elektronische Zeitung ausgebildet sein soll. In den einzelnen Figuren sind verschiedene Bedienmöglichkeiten dargestellt. Es versteht sich, dass diese Bedienmöglichkeiten jeweils einzeln, aber auch in jeder beliebigen Kombination in der Anzeigeeinrichtung 10 implementiert sein können.

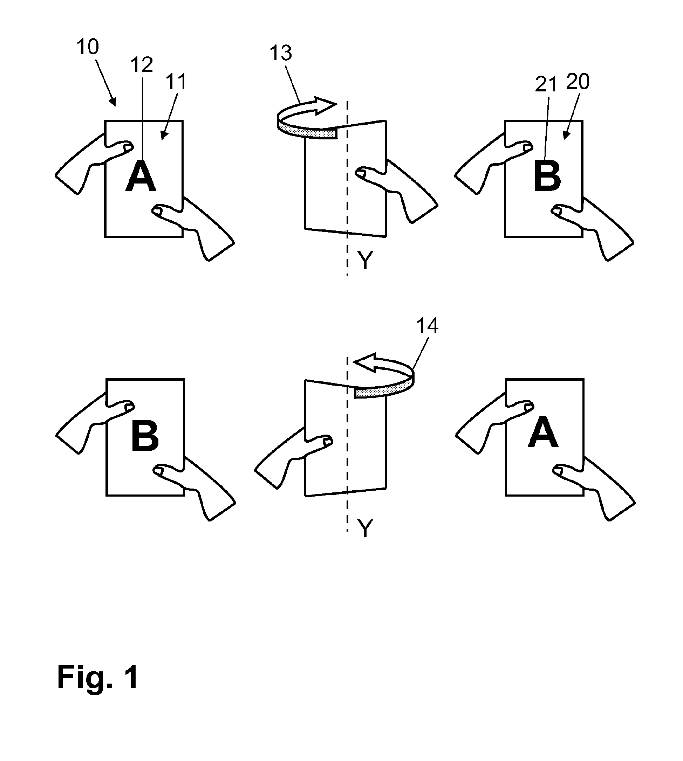

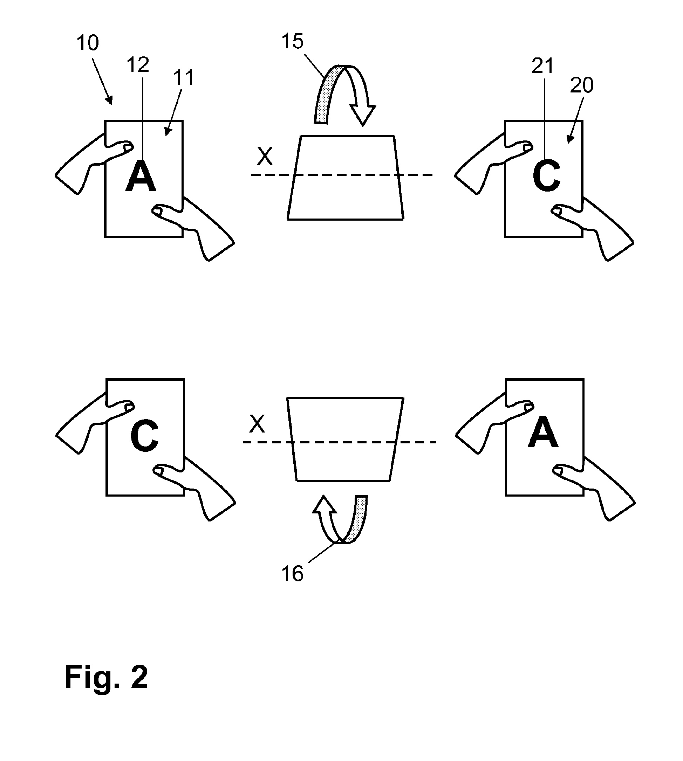

In den Figuren 1 und 2 sind Beispiele dargestellt, bei denen die elektronische Anzeigeeinrichtung 10 über zwei Displayelemente 11, 20 verfügt. Auf dem ersten Displayelement 12 sind Inhalte 12 darstellbar, die der besseren Übersicht halber mit "A" gekennzeichnet sind. Auf dem zweiten Displayelement 20 sind Inhalte 21 darstellbar, die der besseren Übersicht halber mit "B" (Figur 1) beziehungsweise "C" (Figur 2) gekennzeichnet sind. Die beiden Displayelemente 11, 20 sind derart hintereinander angeordnet, dass sie jeweils eine Vorderseite und eine Rückseite der Anzeigeeinrichtung 10 bilden. Somit können auf der Anzeigeinrichtung 10 Inhalte beidseitig angezeigt werden. Die Anzeigeeinrichtung 10 lässt sich in Figur 1 um eine vertikale Drehachse Y drehen, während sich die Anzeigeeinrichtung 10 in Figur 2 um eine horizontale Drehachse X drehen lässt. Selbstverständlich können beide Drehmöglichkeiten kumulativ in einer einzigen Anzeigeeinrichtung vorgesehen sein.

Um eine Drehbewegung um die Drehachse Y in den Drehrichtungen 13, 14 (Figur 1), beziehungsweise um die Drehachse X in den Drehrichtungen 15, 16 (Figur 2) erkennen zu können, verfügt die Anzeigeeinrichtung 10 über wenigstens ein Sensorelement (nicht dargestellt), das zur Erfassung von Bewegungsinformationen und/oder Lageinformationen bezüglich zumindest wenigstens eines Displayelements 11, 20 in wenigstens einer Raumrichtung 13, 14, 15, 16, ausgebildet ist. Weiterhin ist eine Steuereinrichtung (nicht dargestellt) vorgesehen, die zum Umsetzen der vom Sensorelement erfassten Signale in Eingabebefehle und/oder Darstellungsbefehle und/oder Interaktionsbefehle zum Betreiben der Anzeigeeinrichtung 10 ausgebildet ist.

Die erfindungsgemäße Ausgestaltung umfasst insbesondere die Verknüpfung von durch die Sensorelemente erfasste Lage- und/oder Bewegungsinformation mit einem intuitiven Interaktionsprinzip, welches primäre Interaktionen, wie beispielsweise Blättern von Seiten, nicht über technisch anmutende Bedienelemente, wie beispielsweise Knöpfe oder Schalter, sondern über die Bewegung der gesamten Anzeigeeinrichtung 10 vorsieht.

Aus der erkannten Lage der Anzeigeeinrichtung 10 kann eine primäre Interaktion abgeleitet beziehungsweise ausgelöst werden. Diese kann vom aktuellen Kontext abhängen. Beispielweise kann eine senkrecht stehende Anzeigeeinrichtung 10 ein Vorwärtsblättern auslösen, wenn zuvor eine +45-Grad-Lage erkannt wurde oder es kann ein Rückwärtsblättern ausgelöst werden, wenn zuvor eine -45-Grad-Lage erkannt wurde.

Aus der erkannten Bewegung der Anzeigeeinrichtung 10 kann ebenfalls eine Interaktion abgeleitet beziehungsweise ausgelöst werden. Beispielsweise kann eine erkannte Drehbewegung um +90 Grad das Vorwärtsblättern, oder eine erkannte Drehbewegung um -90 Grad das Rückwärtsblättern auslösen. Insbesondere kann eine solche Interaktion vorhersehend ausgelöst werden. Beispielsweise kann die Darstellung der nächsten Ansicht auf dem rückwärtigen Displayelement 20 erfolgen, bevor die Anzeigeeinrichtung 10 vollständig gewendet wurde, so dass störend hohe Latenzzeiten des Displays verborgen werden können. Drehbewegungen um unterschiedliche Achsen können unterschiedliche Interaktionen auslösen. Beispielsweise könnte eine Drehung um eine Längsachse Y, wie sie in Figur 1 dargestellt ist, ein Blättern auslösen, während eine Drehung um eine Querachse X, wie sie in Figur 2 dargestellt ist, einen Menüwechsel oder Kapitelsprung auslösen könnte.

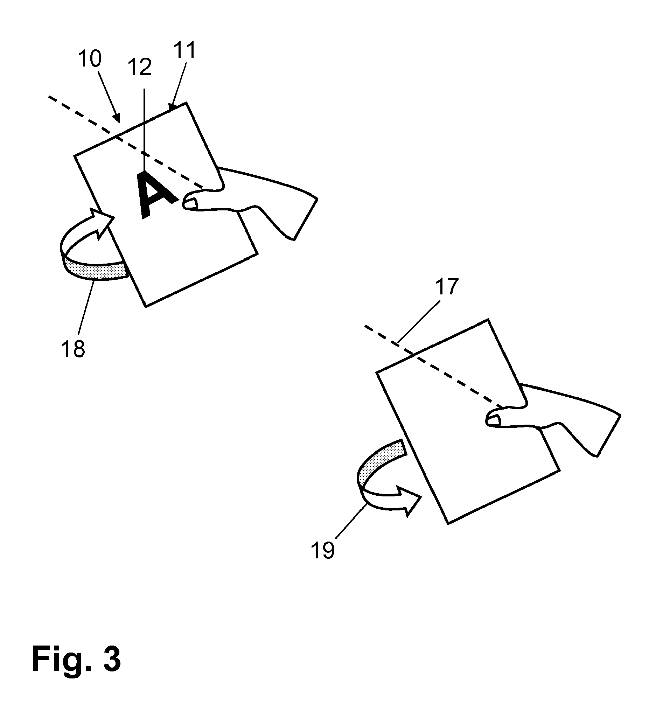

Auswahlvorgänge, wie beispielsweise eines Artikels aus einer Liste mit Artikelüberschriften könnten beispielsweise dadurch erreicht werden, dass, wie in Figur 3 dargstellt ist, die Anzeigeeinrichtung 10 in den Bewegungsrichtungen 18, 19 entlang einer Bewegungsachse 17 kurz vor bewegt und zurück bewegt wird.

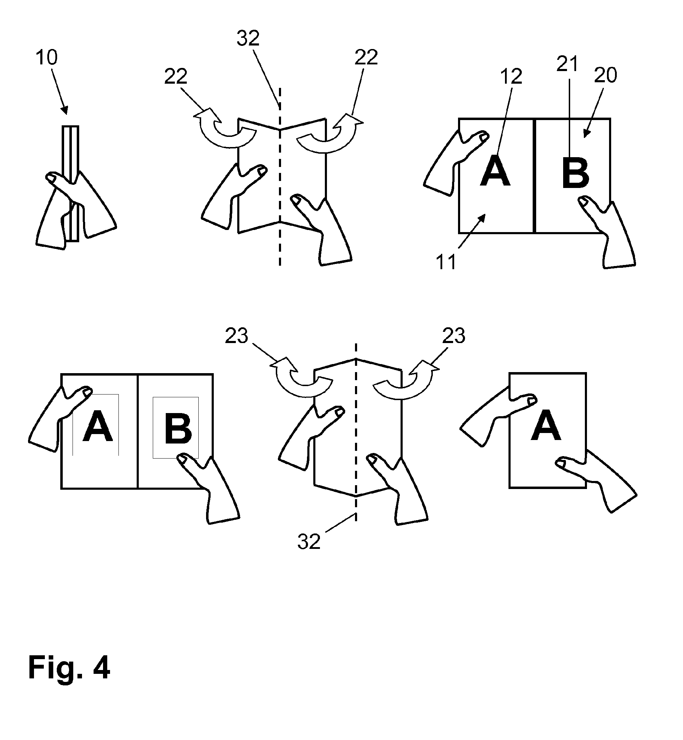

Figur 4 zeigt ein Ausführungsbeispiel, bei dem die elektronische Anzeigeeinrichtung 10 zwei Displayelemente 11, 20 mit dargestellten, unterschiedlichen Inhalten 12 "A" und 21 "B" aufweist, die entlang einer Klappachse 32 klappbar miteinander verbunden sind. Dies kann beispielsweise mittels einer geeigneten Scharniereinrichtung erfolgen. Der obere Teil von Figur 4 zeigt die Möglichkeit, dass die Anzeigeeinrichtung 10 im zusammengeklappten Zustand durch die Außenseiten geschützt wird. Nach dem Aufklappen in Klapprichtung 22 stehen die beiden Displayelemente 11, 20 als Leseseiten zur Verfügung. Der untere Teil von Figur 4 verdeutlicht eine Gerätehandhabung, bei denen die beiden Displayelemente 11, 20, und damit die beiden Leseseiten, in Klapprichtung 23 umgeschlagen werden können, so dass sie aufeinander zu liegen kommen. Dadurch erhält man ein kleineres Format, das jedoch auf Vorder- und Rückseite über die Displayelemente 11, 20 gelesen werden kann.

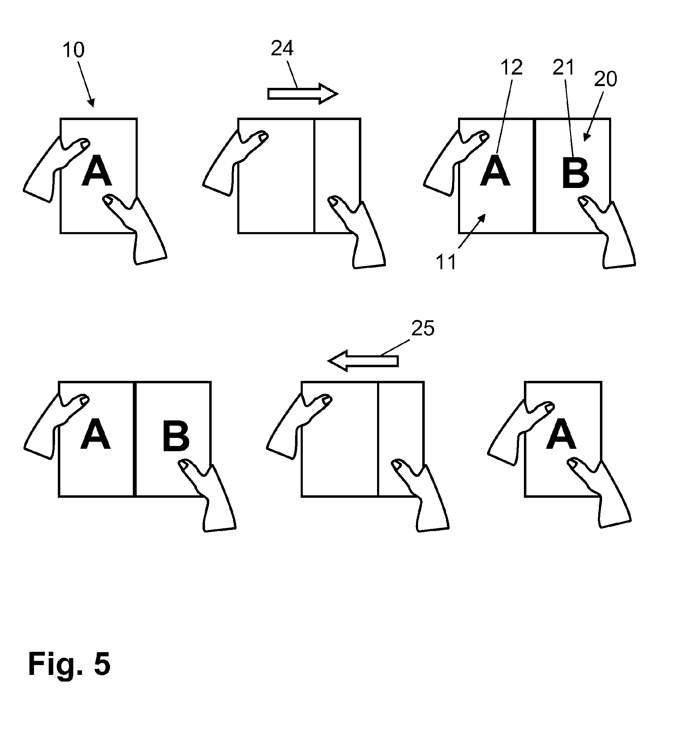

Figur 5 zeigt eine alternative Ausführungsform, bei der wiederum zwei Displayelemente 11, 20 mit dargestellten, unterschiedlichen Inhalten 12 "A" und 21 "B" vorgesehen sind, die über einen Schiebemechanismus in den Verschieberichtungen 24, 25 von einem 'zwei-seitigen' zu einem kleineren, 'ein-seitigen' Zustand verändert werden können. Gelesen wird dann jeweils nur über die Frontsicht.

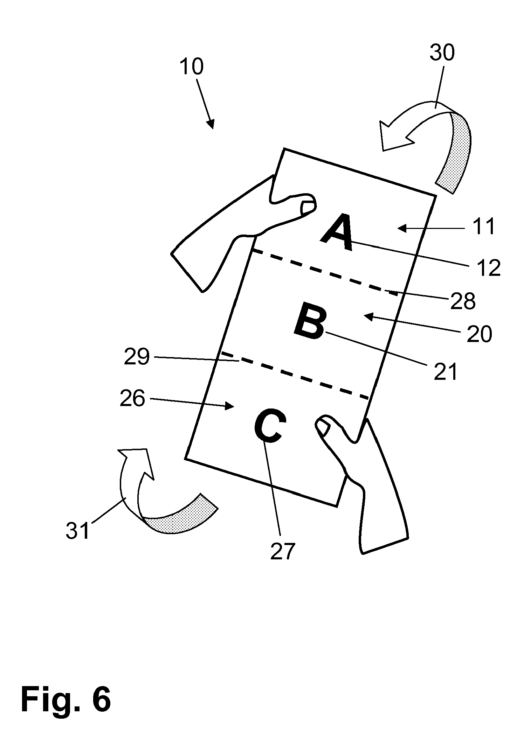

Figur 6 schließlich verdeutlicht eine weitere Klappalternative. Bei diesem Beispiel sind insgesamt drei Displayelemente 11, 20 und 26 vorgesehen, auf denen jeweils Inhalte 12 "A", 21 "B" und 27 "C" dargestellt werden können. Die einzelnen Displayelemente 11, 20 und 26 können um Klappachsen 28, 29 in verschiedenen Klapprichtungen 30, 31 geklappt werden. Durch die drei Displayelemente 11, 20, 26 wird eine 3-fache Faltung ermöglicht, und zwar im Beispiel in einem Langformat. Eine Lesemöglichkeit besteht sowohl über die Vorderseite als auch die Rückseite. Bei einer kompletten Faltung ist die Anzeigeeinrichtung 10 klein und länglich. Inhalte können auch nach dem Zusammenfalten dargestellt werden, beispielsweise in einzelnen Zeitungskolumnen, so dass die Anzeigeeinrichtung 10 auch in beengten Situationen, wie beispielsweise in der U-Bahn, komfortabel genutzt werden kann.

Diese Veränderungsmöglichkeiten der Anzeigeeinrichtungsform, wie sie in den Figuren 1 bis 6 dargestellt ist, wobei die gezeigten und beschriebenen Bewegungsmöglichkeiten jeweils einzeln, oder aber auch in jeder beliebigen Kombination in der Anzeigeeinrichtung 10 implementiert sein können, entsprechen in hervorragender Weise den vielfältigen Nutzungsformen von Papier-Zeitungen, übertragen auf ein elektronisches Gerät.

### Bezugszeichenliste

- 10: Elektronische Anzeigeeinrichtung
- 11: Displayelement
- 12: Inhalt
- 13: Drehrichtung
- 14: Drehrichtung
- 15: Drehrichtung
- 16: Drehrichtung
- 17: Bewegungsachse
- 18: Bewegungsrichtung
- 19: Bewegungsrichtung
- 20: Displayelement
- 21: Inhalt
- 22: Klapprichtung
- 23: Klapprichtung
- 24: Verschieberichtung
- 25: Verschieberichtung
- 26: Displayelement
- 27: Inhalt
- 28: Klappachse
- 29: Klappachse
- 30: Klapprichtung
- 31: Klapprichtung
- 32: Klappachse

- X: Drehachse
- Y: Drehachse

## Patentansprüche

1. Elektronische Anzeigeeinrichtung (10), insbesondere portable elektronische Anzeigeeinrichtung, mit wenigstens einem Displayelement (11, 20, 26) zum Anzeigen von Inhalten (12, 21, 27), und mit einer Bedieneinrichtung zum Bedienen der Anzeigeeinrichtung (10), aufweisend wenigstens ein Bedienelement zum Zwecke der Eingabe von Informationen durch den Nutzer und/oder der Interaktion mit der Anzeigeeinrichtung, **dadurch gekennzeichnet, dass** wenigstens ein Bedienelement als Sensorelement zur Erfassung von Bewegungsinformationen und/oder Lageinformationen bezüglich zumindest wenigstens eines Displayelements (11, 20, 26) in wenigstens einer Raumrichtung (13, 14, 15, 16, 18, 19, 22, 23, 24, 25, 30, 31) ausgebildet ist und dass eine Steuereinrichtung vorgesehen ist, die zum Umsetzen der vom Sensorelement erfassten Signale in Eingabebefehle und/oder Interaktionsbefehle zum Betreiben der Anzeigeeinrichtung (10) ausgebildet ist.

2. Elektronische Anzeigeeinrichtung nach Anspruch 1, **dadurch gekennzeichnet, dass** wenigstens ein Sensorelement zur Erfassung von Bewegungsinformationen und/oder Lageinformationen als Sensorelement zur Erfassung einer Drehbewegung (13, 14, 15, 16) und/oder einer Klappbewegung (22, 23, 30, 31) um wenigstens eine Achse (X, Y, 28, 29, 32) ausgebildet ist.

3. Elektronische Anzeigeeinrichtung nach Anspruch 1 oder 2, **dadurch gekennzeichnet, dass** wenigstens ein Sensorelement zur Erfassung von Bewegungsinformationen und/oder Lageinformationen als Sensorelement zur Erfassung einer Verschiebung (18, 19) in wenigstens einer Schieberichtung (17, 24, 25) ausgebildet ist.

4. Elektronische Anzeigeeinrichtung nach einem der Ansprüche 1 bis 3, **dadurch gekennzeichnet, dass** wenigstens ein Sensorelement zur Erfassung von Bewegungsinformationen und/oder Lageinformationen als Beschleunigungssensorelement und/oder als Gyrosensorelement und/oder als Magnetfeldsensorelement ausgebildet ist.

5. Elektronische Anzeigeeinrichtung nach einem der Ansprüche 1 bis 4, **dadurch gekennzeichnet, dass** wenigstens ein weiteres Sensorelement in Form eines berührungssensitiven Sensorelements vorgesehen ist.

6. Elektronische Anzeigeeinrichtung nach einem der Ansprüche 1 bis 5, **dadurch gekennzeichnet, dass** die Anzeigeeinrichtung (10) zumindest bereichsweise als flexible Anzeigeeinrichtung ausgebildet ist und dass wenigstens ein weiteres Sensorelement zum Erfassen des Biegezustands der elektronischen Anzeigeeinrichtung (10) vorgesehen ist.

7. Elektronische Anzeigeeinrichtung nach einem der Ansprüche 1 bis 6, **dadurch gekennzeichnet, dass** wenigstens zwei Bedienelemente in Form von Sensorelementen vorgesehen sind, die beabstandet voneinander an unterschiedlichen Orten der Anzeigeeinrichtung (10) vorgesehen sind.

8. Elektronische Anzeigeeinrichtung nach einem der Ansprüche 1 bis 7, **dadurch gekennzeichnet, dass** in der Steuereinrichtung eine Speichereinrichtung zum Speichern der von wenigstens einem Sensorelement erfassten Signale vorgesehen ist und dass die Steuereinrichtung eine Vergleichseinrichtung zum Vergleichen aktuell erfasster Sensorsignale mit zurückliegenden, in der Speichereinrichtung abgespeicherten Sensorsignalen aufweist.

9. Elektronische Anzeigeeinrichtung nach einem der Ansprüche 1 bis 8, **dadurch gekennzeichnet, dass** die Anzeigeeinrichtung (10) zwei oder mehr Displayelemente (11, 20, 26) aufweist, die nebeneinander und/oder hintereinander angeordnet sind.

10. Elektronische Anzeigeeinrichtung nach Anspruch 9, **dadurch gekennzeichnet, dass** wenigstens zwei Displayelemente (11, 20, 26) klappbar miteinander verbunden sind und/oder doppelseitig angeordnet sind und/oder verschiebbar gegeneinander angeordnet sind.

11. Verfahren zum Bedienen einer elektronischen Anzeigeeinrichtung, insbesondere einer portablen elektronischen Anzeigeeinrichtung, wobei die Anzeigeeinrichtung wenigstens ein Displayelement zum Anzeigen von Inhalten, und eine Bedieneinrichtung zum Bedienen der Anzeigeeinrichtung, aufweisend wenigstens ein Bedienelement zum Zwecke der Eingabe von Informationen durch den Nutzer und/oder der Interaktion mit der Anzeigeeinrichtung, aufweist, **gekennzeichnet durch** folgende Schritte:
a) mittels wenigstens eines Bedienelements, das als Sensorelement zur Erfassung von Bewegungsinformationen und/oder Lageinformationen bezüglich zumindest wenigstens eines Displayelements in wenigstens einer Raumrichtung ausgebildet ist, wird die Lage des Displayelements erfasst sowie eine Bewegung des Displayelements aus dieser Lage heraus und/oder eine Lageveränderung des Displayelements ermittelt;
b) die vom Sensorelement erfassten Signale werden an eine Steuereinrichtung der Anzeigeeinrichtung weitergeleitet;
c) in der Steuereinrichtung werden die vom Sensorelement erfassten Signale in Eingabebefehle und/oder Interaktionsbefehle zum Betreiben der Anzeigeeinrichtung umgesetzt.

12. Verfahren nach Anspruch 11, **dadurch gekennzeichnet, dass** dieses zum Bedienen einer Anzeigeeinrichtung nach einem der Ansprüche 1 bis 10 ausgebildet ist.
